# EUROPEAN PATENT SPECIFICATION

(11) **EP 1 303 968 B1**
(45) Date of publication and mention of the grant of the patent: **02.11.2006**
(21) Application number: 01957959.8
(22) Date of filing: 12.07.2001
(51) Int. Cl.: H04L 29/06, H04L 12/28, H04L 12/56, H04L 9/08

(54) **SYSTEM AND METHOD FOR SECURE MOBILE COMMUNICATION**
SYSTEM UND VERFAHREN ZUR SICHEREN MOBILEN KOMMUNIKATION
SYSTEME DE COMMUNICATION MOBILE SECURISEE ET PROCEDE ASSOCIE

(30) Priority: 18.07.2000 US 618850
(43) Date of publication of application: 23.04.2003
(73) Proprietor: MOTOROLA, INC., Schaumburg, IL 60196 (US)
(72) Inventor: SHI, Rong, Abbey Meads, Swindon, Wiltshire SN2 3WH (GB); COMER, Erwin, Perry, Queen Creek, AZ 885242 (US); BILLINGTON, Stephen, Eric, Wootton Bassett, Wiltshire SN4 7EZ (GB)
(74) Representative: Jepsen, René Pihl
(86) International application number: PCT/EP2001/008092
(87) International publication number: WO 2002/007404

(56) References cited:
- EP-A- 0 658 021
- US-A- 5 222 140
- US-A- 5 862 220

## Description

### Field of the Invention

This invention relates to a communication system and a method of providing secure communication therefor.

### Background of the Invention

In a cellular mobile communication system, such as for example the Global System for Mobile communication (GSM) or the Universal Mobile Telecommunication System (UMTS), each of the remote terminals communicates with typically a fixed base station. A remote is typically a mobile phone but can be any terminal accessing the communication system. Communication from the remote terminal to the base station is known as uplink and communication from the base station to the remote terminal is known as downlink. The total coverage area of the system is divided into a number of separate cells each covered by a single base station. The cells are typically geographically distinct with an overlapping coverage area with neighbouring cells. As a remote terminal moves from the coverage area of one cell to the coverage area of another cell, the communication link will change from being between the remote terminal and the base station of the first cell to being between the remote terminal and the base station of the second cell. This is known as a handover. Specifically, some cells may lie completely within the coverage of other larger cells.

All base stations are interconnected by a network. This network comprises communication lines, routers, switches, interfaces to other communication networks, various controllers required for operating the network and the base stations themselves. A call from a remote terminal is routed through the network to the destination specific for this call. If the call is between two remote terminals of the same communication system, the call will be routed through the network to the base station of the cell in which the other remote terminal is currently located. A connection is thus established between the two serving cells through the network. Alternatively, if the call is between a remote terminal and a telephone connected to the Public Switched Telephone Network (PSTN) the call is routed from the serving base station to the interface between the cellular mobile communication system and the PSTN. It is then routed from the interface to the telephone by the PSTN. In a similar fashion a call may be routed to a destination through other networks such as for example local area networks or the internet.

In some communication systems, such as the Universal Mobile Telecommunication System (UMTS) currently under development, the network is split into a core network and an access network.

The core network is responsible for authenticating the mobile access, establishing security protections for the radio access, macro mobility management, session or call management, and inter-networking with other networks, such as the PLMN (Public Land Mobile Network), Internet or PSTN.

The core network therefore comprises the necessary routing and/or switching elements, interfaces to serving networks such as the PSTN, the Internet, other cellular systems (e.g. between GSM and UMTS), mobile station register entities (such as the Home Location Register and Visitors Location Register used in GSM). The core network would ideally require no knowledge of the technology (e.g. radio interface) used in the access network.

In the case of a cellular mobile communication system, the access network comprises those elements specific to a particular radio interface e.g. mobiles stations, the base stations used to transmit and receive the radio signals from the remote terminals, and the controllers used to route the calls between base stations and the core network.

Typically, the access network will comprise a plurality of access systems with different access nodes. An access system typically comprise an access controller controlling a number of access nodes where each access node comprises one or more base stations and possibly one or more site controllers controlling a number of base stations .

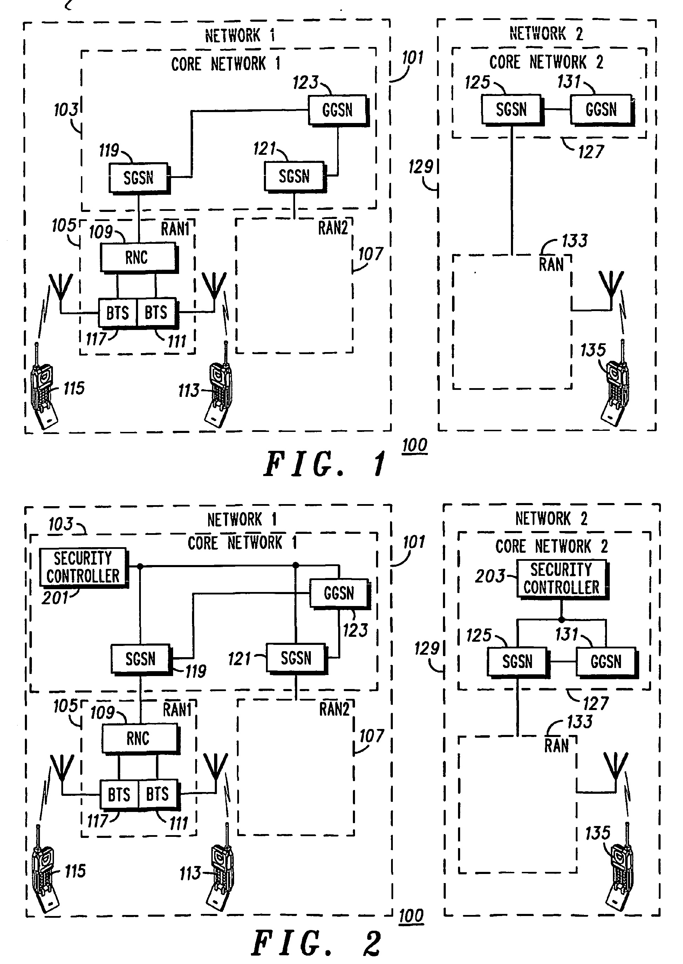

Fig. 1 illustrates an example of a packet switched UMTS communication system 100. A first network 101 comprises a core network 103 and two radio access networks (RAN) 105,107. The first RAN 105 comprises a radio node controller 109 (RNC), and a base station 111 (for simplicity the base station described is-considered to both include the UMTS element known as a Node B as well as the base station element). A UMTS remote terminal 113 communicates with the base station over a radio interface. Other remote terminals 115 may be associated with other base stations 117 covering other cells and typically a number of base stations 111,117 are connected to the same RNC 109.

The RNC 109 is connected to a Serving GPRS Support Node 119 (SGSN) network element in the core network 103. The SGSN is responsible for tracking the mobile's location, performing authentication and key agreement and routing packets between the core network and radio access networks.

The SGSN 119 is connected to a Gateway GPRS Support Node 123 (GGSN) which is responsible for interfacing between the core network and other external networks such as PSTN networks or the Internet. The GGSN in addition provides other functions including routing and packet relaying function in case of remote terminal roaming.

Other RNCs or other RANs 107 may be connected to other SGSNs 121.

Different UMTS operators will operate their own network and in order to for example support communication from a remote terminal connected to one network to a remote terminal connected to another network, the different networks are interconnected. This is shown in Fig. 1 where the GGSN 123 is connected to an SGSN 125 of a second core network 127 of a second UMTS network 129 operated by a different operator. The second network 129 is in this case similar to the first network and comprises network elements including a GGSN 131 and a RAN 133 supporting one or more remote terminals 135

The connection between the networks can be by a dedicated proprietary connection between specific network elements but is more typically a logical connection using open connections and can for example be using the public SS7 (Signalling Service 7) network or using an Internet Protocol (IP) network.

A disadvantage with using open connections is that they are not as secure as dedicated connections and therefore are more volatile to attacks. These attacks include:
1. Eavesdropping which means that attackers listen to the messages during their transport without the source or destination knowing.
2. Tampering means that attackers modify the messages in transport without being noticed by the receiver.
3. Impersonation is said to happen when a malicious party pretends to be the legitimate sender of the message and deceives the receiver to treat it as from the legitimate sender.
4. Replay attack covers intercepting a message and replaying it at later time without the receiver realising that it has been received more than once.

In order to prevent these attacks, security means are adopted and introduced on the communication between network elements. However, although these security means can be implemented within a single network, it is problematic to implement them across independent networks or sub-networks. This is because the attacks are more likely to be launched in the inter-network environment and key distribution is more difficult due to unsecured_internetworking communication. Those keys are equally used by the two communication parties and are identical in the symmetric security protection.

European Patent Application EP 0 658 021 B1 describes examples of security within a single wireless LAN type network

For UMTS it has been suggested that symmetric security protection is utilised which means that both communicating parties use identical keys. The security keys are distributed in a two layer process where keys are initially established between a central Key Administrative Centre (KAC) in the first network and a KAC in the second network. Subsequently the keys are distributed to the interconnected network elements (SGSN and GGSN of different networks), which communicate using the keys. A security key is an identification key, which is applied to a received message in order to verify that it was transmitted from the assumed sender or to encrypt and decrypt the messages for privacy reason.

The inventors of the current invention have realised that these approaches for providing secure communication between networks are volatile and does not provide sufficient security. In particular, the inventors have realised that simply distributing security keys as envisaged for UMTS is insufficient and can lead to security breaches. For example, simply having a security key distributed does not provide sufficient information whether a message has been transmitted previously and this approach is therefore vulnerable to replay attacks which is considered a significant risk.

An improved system for providing secure connections between independent networks or sub-networks is therefore desired.

### Summary of the Invention

The current invention seeks to provide a system having improved security of connections between networks or sub-networks.

Accordingly, there is provided a UMTS communication system in accordance with claim 1.

An advantage of the current invention is that it improves the security of communications between networks as not only security keys but also security mechanisms are established between security controllers of different networks, and distributed to the network elements. Consequently specific mechanisms can be set up directed to provide protection against different forms of attack. For example, the mechanism can provide the distribution of a communication window during which the message must be sent and received whereby protection against replay attacks is substantially improved.

Preferably the communication between the first and second network element is over an Internet Protocol connection and according to one feature of the invention the security mechanism includes at least an anti-replay mechanism.

According to a second aspect of the invention, there is provided a method of providing secure communication in a UMTS communication system according to claim 10.

### Brief Description of the Drawings

An embodiment of the present invention is described below, by way of example only, with reference to the Drawings, in which:
FIG. 1 is an illustration of a UMTS communication system according to prior art; and
FIG. 2 is an illustration of an embodiment of a communication system in accordance with the invention.

### Detailed Description of a Preferred Embodiment

The following description focuses on an embodiment compliant with the current approach for the standardisation of UMTS.

FIG 2 shows a schematic diagram of an embodiment of a UMTS communication system in accordance with an embodiment of the invention. The system is similar to the communication system of Fig. 1, which has already been described, but in addition comprises a first security controller 201 in the first network and a second security controller 203 in the second network.

In the embodiment the first network is owned and operated by a first operator whereas the second network is owned and operated by a second operator. In the example, a first network element 119 of the first network is connected to a second network element 125 of the second network.

The network elements may be a GGSN and a SGSN as envisaged for packet based services for UMTS but can in principle be any network element including both packet switched and network switched network elements. The connection between the network elements is preferably established through a public SS7 network or IP networks and using the MAP protocol. The MAP protocol is a core network signalling protocol utilised by GSM and UMTS circuit switched mode. It is based on the SS7 signalling system. A person skilled in the art will appreciate that any physical or virtual connection can be used without detracting from the invention.

Public networks and in particular SS7 and IP networks are not secure and therefore any communication between the first and second network elements should include security features ensuring that the communication is resistant to attacks. However, if these security features are established directly between the communicating network elements, the complexity of the network elements is increased to the additional required functionality. As each network typically comprises a high number of network elements this leads to a substantial total complexity increase of the network.

In accordance with the preferred embodiment, this is achieved by the first and second security controller establishing both a security key and a security mechanism and communicating these to the first and second network elements. The first and second network element communicate with each other using the security key and security mechanism.

In the preferred embodiment, the communication between the first and second network element is through an IP network. A security framework known as IPsec has been standardised for IP networks by the Internet Engineering Task Force (IETF). It is called a framework because it comprises various protocol and algorithm options for encryption, integrity check and authentication. These IPSec security mechanisms utilise symmetric-security key technologies, which means both communication parties use a shared secret key for encryption, integrity check and packet-authentication although each service utilises a unique key.

IPSec specifies many alternatives and options and therefore for two communicating parties to communicate securely they should establish a common set of security mechanisms including security protocols and algorithms. In addition, the security key is established to provide secure communication when used with the mechanisms. The established keys together with the agreement security mechanisms is called an IPSec Security Association (SA).

In order for the first and second network element to communicate securely not only the security key but also the security mechanism established by the central security controllers and distributed to the network elements. The entire IPSec Security Association is thus distributed to the network elements as described in the following.

Each network, or alternatively each independent sub network, has a centralised security controller 201,203. When the first network element 123 need to communicate with the second network element 125, the first 201 and second 203 network element communicate in order to establish an entire IPsec Security Association. It will be apparent that the first and second network element can communicate through a dedicated connection, a virtual connection through a network or any other connection allowing data to be exchanged between the units. The security controllers can use any known method for establishing Security Association between two communicating units. The Security Association established includes symmetric keys and the security mechanisms including all necessary protocols and algorithms.

The entire Security Association is subsequently downloaded to the first and second network element. These then proceed to set up and carry out the desired communication using the entire Security Association including both security mechanisms and security keys. When the communication terminates, the security controller is informed and the Security Association can be terminated thereby freeing up resources.

As the Security Association is established centrally between security controllers, the key management and security mechanism establishment can be off loaded from the network elements such as GGSNs or SGSNs. This reduces the complexity and cost of these network elements and as a typical network comprises many such network elements a substantial overall complexity reduction is achieved.

In addition, because the entire Security Association is established and distributed to the network elements the security of the link between the two elements is identical to that which can be achieved between two network elements directly establishing a Security Association between them.

As an example, in the preferred embodiment, the Security Association includes defining a playback security mechanism. This mechanism operates by having a Sequence Number Counter (SNC) running independently at both the first and second network elements. The SNCs are at given times set to the same sequence number by the Security Associations received from the security controllers. The transmitting network element includes the current sequence number and when received the receiving network element compares this sequence number to the value of its own SNC. The receiving network element will then only accept the communication if the received sequence number fits within an anti-replay window. By establishing this mechanism including a sequence number and an anti-replay window within the Security Association, the two network elements are able to provide this anti-replay mechanism. In contrast, if only security keys were distributed this would only enable verification of the communication being from the correct source but not provide any anti-replay protection.

The present discussion has specifically considered a UMTS packet switched network including SGSN and GGSN network elements. However, it will be apparent to a person skilled in the art that the invention is applicable to a wide variety of networks. Likewise, the invention is equally applicable to circuit switched networks. The invention can thus be applied to the circuit switched elements of a UMTS network and specifically the first and second network elements can for example be base stations, Base Station Controllers, Master Switch Centres, Home Location Registers or Visitor Location Registers.

## Claims

1. A UMTS communication system (100) with communication between independent first and second UMTS networks (101, 129) under control of respective first and second operators, the system comprising:
the first network (101) having a first security controller (201) and a first network element (123) connected to said first security controller (201);
the second network (125) having a second security controller (203) and a second network element (125) connected to said second security controller (203);
a first communication link between said first security controller (201) and said second security controller (203);
a second unsecure communication link between said first network element (123) and said second network element (125);
wherein said first and second security controllers (201, 203) are operable to establish a common security key and a common security mechanism including a security protocol by negotiation to provide a particular protection mechanism for communication through said first communication link and to communicate this to said first and second network elements (123, 125); and
said first and second network elements (123, 125) comprises means for communicating with each other through said second communication link using said security key and security mechanism to provide secure communication.

2. A UMTS communication system as claimed in claim 1, wherein said communication between said first and second network element is over an Internet Protocol connection.

3. A UMTS communication system as claimed in claim 1, wherein a security association is established between security controllers (201, 203) and distributed to the network elements (123, 125).

4. A UMTS communication system as claimed in claim 1, wherein said security mechanism includes at least a security algorithm.

5. A UMTS communication system as claimed in claim 1, wherein said security mechanism includes at least an anti-replay mechanism.

6. A UMTS communication system as claimed in claim 5, wherein said security mechanism includes at least a security sequence number.

7. A UMTS communication system as claimed in claim 5, wherein said security mechanism includes at least an anti replay window.

8. A UMTS communication system as claimed in claim 1, wherein said security mechanism comprises a Security Association chosen from an Internet Protocol security framework.

9. A UMTS communication system as claimed in claim 1, wherein said first and second network elements are chosen from the group consisting of a Serving GPRS Support Node (SGSN) and a Gateway GPRS Support Node (GGSN).

10. A method of providing secure communication in a UMTS communication system comprising a first network having a first security controller and a first network element connected to said first security controller; a second network having a second security controller and a second network element connected to said second security controller; a second unsecure communication link between said first network element and said second network element; comprising the steps of:
providing a first communication link between said first security controller and said second security controller;
said first and second security controllers establishing a security key by negotiation through said first communication link;
said first and second security controllers establishing a common security mechanism including a security protocol to provide a particular protection mechanism by communication through said first communication link;
said first and second security controllers communicating said security key to said first and second network elements;
said first and second security controllers communicating said security mechanism to said first and second network element; and
said first and second network elements communicating over said second communication link using said security key and said security mechanism.

## Patentansprüche

1. UMTS-Kommunikationssystem (100) mit einer Kommunikation zwischen einem unabhängigen ersten UMTS-Netz und einem unabhängigen zweiten UMTS-Netz (101, 129) unter Steuerung eines entsprechenden ersten und zweiten Betreibers, wobei das System umfasst:
das erste Netz (101),das einen ersten Sicherheitscontroller (201) und ein mit dem ersten Sicherheitscontroller (201) verbundenes erstes Netzelement (123) aufweist;
das zweite Netz (129), das einen zweiten Sicherheitscontroller (203) und ein mit dem zweiten Sicherheitscontroller (203) verbundenes zweites Netzelement (125) aufweist;
eine erste Kommunikationsverbindung zwischen dem ersten Sicherheitscontroller (201) und dem zweiten Sicherheitscontroller (203);
eine zweite unsichere Kommunikationsverbindung zwischen dem ersten Netzelement (123) und dem zweiten Netzelement (125);
wobei der erste Sicherheitscontroller und der zweite Sicherheitscontroller (201, 203) betriebsfähig sind, durch Verhandlung einen gemeinsamen Sicherheitsschlüssel und einen gemeinsamen Sicherheitsmechanismus, der ein Sicherheitsprotokoll umfasst, einzurichten, um einen bestimmten Schutzmechanismus für eine Kommunikation durch die erste Kommunikationsverbindung zur Verfügung zu stellen und um das an das erste Netzelement und das zweite Netzelement (123, 125) zu kommunizieren; und
wobei das erste Netzelement und das zweite Netzelement (123, 125) Mittel umfassen, um durch die zweite Kommunikationsverbindung miteinander zu kommunizieren, wobei der Sicherheitsschlüssel und Sicherheitsmechanismus verwendet werden, um eine sichere Kommunikation zur Verfügung zu stellen.

2. UMTS-Kommunikationssystem nach Anspruch 1, wobei die Kommunikation zwischen dem ersten Netzelement und dem zweiten Netzelement über eine Internet Protocol-Verbindung erfolgt.

3. UMTS-Kommunikationssystem nach Anspruch 1, wobei eine Sicherheitsassoziation zwischen Sicherheitscontrollern (201, 203) eingerichtet und an die Netzelemente (123, 125) verteilt wird.

4. UMTS-Kommunikationssystem nach Anspruch 1, wobei der Sicherheitsmechanismus zumindest einen Sicherheitsalgorithmus umfasst.

5. UMTS-Kommunikationssystem nach Anspruch 1, wobei der Sicherheitsmechanismus zumindest einen Anti-Replay-Mechanismus umfasst.

6. UMTS-Kommunikationssystem nach Anspruch 5, wobei der Sicherheitsmechanismus zumindest eine Sicherheitssequenznummer umfasst.

7. UMTS-Kommunikationssystem nach Anspruch 5, wobei der Sicherheitsmechanismus zumindest ein Anti-Replay-Fenster umfasst.

8. UMTS-Kommunikationssystem nach Anspruch 1, wobei der Sicherheitsmechanismus eine aus einem Internet Protocol-Sicherheits-Framework gewählte Security Association umfasst.

9. UMTS-Kommunikationssystem nach Anspruch 1, wobei das erste Netzelement und das zweite Netzelement aus der Gruppe bestehend aus einem Serving GPRS Support Node (SGSN) und einem Gateway GPRS Support Node (GGSN) gewählt werden.

10. Verfahren zu einem Bereitstellen von sicherer Kommunikation in einem UMTS-Kommunikationssystem, das ein erstes Netz mit einem ersten Sicherheitscontroller und einem mit dem ersten Sicherheitscontroller verbundenen ersten Netzelement, ein zweites Netz mit einem zweiten Sicherheitscontroller und einem mit dem zweiten Sicherheitscontroller verbundenen zweiten Netzelement, eine zweite unsichere Kommunikationsverbindung zwischen dem ersten Netzelement und dem zweiten Netzelement umfasst, wobei das Verfahren die Schritte umfasst:
Bereitstellen einer ersten Kommunikationsverbindung zwischen dem ersten Sicherheitscontroller und dem zweiten Sicherheitscontroller;
wobei der erste Sicherheitscontroller und der zweite Sicherheitscontroller durch Verhandlung durch die erste Kommunikationsverbindung einen Sicherheitsschlüssel einrichten;
wobei der erste Sicherheitscontroller und der zweite Sicherheitscontroller einen gemeinsamen Sicherheitsmechanismus, der ein Sicherheitsprotokoll umfasst, einrichten, um durch Kommunikation durch die erste Kommunikationsverbindung einen bestimmten Schutzmechanismus zur Verfügung zu stellen;
wobei der erste Sicherheitscontroller und der zweite Sicherheitscontroller den Sicherheitsschlüssel an das erste Netzelement und das zweite Netzelement kommunizieren;
wobei der erste Sicherheitscontroller und der zweite Sicherheitscontroller den Sicherheitsmechanismus an das erste Netzelement und das zweite Netzelement kommunizieren; und
wobei das erste Netzelement und das zweite Netzelement unter Verwendung des Sicherheitsschlüssels und des Sicherheitsmechanismus über die zweite Kommunikationsverbindung kommunizieren.

## Revendications

1. Système de communication UMTS (100) avec une communication entre un premier et un deuxième réseau UMTS (101, 129) indépendants, sous le contrôle de premier et deuxième opérateurs respectifs, le système comprenant :
le premier réseau (101) ayant un premier contrôleur de sécurité (201) et un premier élément réseau (123) connecté au dit premier contrôleur de sécurité (201) ;
le deuxième réseau (125) ayant un deuxième contrôleur de sécurité (203) et un deuxième élément réseau (125) connecté au dit deuxième contrôleur de sécurité (203) ;
une première liaison de communication entre ledit premier contrôleur de sécurité (201) et ledit deuxième contrôleur de sécurité (203) ;
une deuxième liaison de communication non sécurisée entre ledit premier élément réseau (123) et ledit deuxième élément réseau (125) ;
dans lequel lesdits premier et deuxième contrôleurs de sécurité (201, 203) sont opérables pour établir une clé de sécurité commune et un mécanisme de sécurité commun incluant un protocole de sécurité par une négociation afin de fournir un mécanisme de protection particulier pour une communication par l'intermédiaire de ladite première liaison de communication et afin de communiquer celui-ci auxdits premier et deuxième éléments réseau (123, 125) ; et
lesdits premier et deuxième éléments réseau (123, 125) comprennent des moyens pour communiquer entre eux par l'intermédiaire de ladite deuxième liaison de communication en utilisant ladite clé de sécurité et ledit mécanisme de sécurité afin de fournir une communication sécurisée.

2. Système de communication UMTS selon la revendication 1, dans lequel ladite communication entre lesdits premier et deuxième éléments réseau est réalisée sur une connexion IP (protocole Internet).

3. Système de communication UMTS selon la revendication 1, dans lequel une association de sécurité est établie entre des contrôleurs de sécurité (201, 203) et distribuée aux éléments réseau (123, 125).

4. Système de communication UMTS selon la revendication 1, dans lequel ledit mécanisme de sécurité inclut au moins un algorithme de sécurité.

5. Système de communication UMTS selon la revendication 1, dans lequel ledit mécanisme de sécurité inclut au moins un mécanisme d'anti-réémission.

6. Système de communication UMTS selon la revendication 5, dans lequel ledit mécanisme de sécurité inclut au moins un numéro de séquence de sécurité.

7. Système de communication UMTS selon la revendication 5, dans lequel ledit mécanisme de sécurité inclut au moins une fenêtre d'anti-réémission.

8. Système de communication UMTS selon la revendication 1, dans lequel ledit mécanisme de sécurité comprend une association de sécurité choisie à partir d'une infrastructure de sécurité IP.

9. Système de communication UMTS selon la revendication 1, dans lequel lesdits premier et deuxième éléments réseau sont choisis à partir du groupe constitué par un noeud de support GPRS de desserte (SGSN) et un noeud de support GPRS passerelle (GGSN).

10. Procédé pour fournir des communications sécurisées dans un système de communication UMTS comprenant un premier réseau ayant un premier contrôleur de sécurité et un premier élément réseau connecté au dit premier contrôleur de sécurité ; un deuxième réseau ayant un deuxième contrôleur de sécurité et un deuxième élément réseau connecté au dit deuxième contrôleur de sécurité ; une deuxième liaison de communication non sécurisée entre ledit premier élément réseau et ledit deuxième élément réseau ; comprenant les étapes consistant à :
fournir une première liaison de communication entre ledit premier contrôleur de sécurité et ledit deuxième contrôleur de sécurité ;
lesdits premier et deuxième contrôleurs de sécurité établissant une clé de sécurité par une négociation par l'intermédiaire de ladite première liaison de communication ;
lesdits premier et deuxième contrôleurs de sécurité établissant un mécanisme de sécurité commun incluant un protocole de sécurité pour fournir un mécanisme de protection particulier par une communication par l'intermédiaire de ladite première liaison de communication ;
lesdits premier et deuxième contrôleurs de sécurité communiquant ladite clé de sécurité auxdits premier et deuxième éléments réseau ;
lesdits premier et deuxième contrôleurs de sécurité communiquant ledit mécanisme de sécurité auxdits premier et deuxième éléments réseau ; et
lesdits premier et deuxième éléments réseau communiquant sur ladite deuxième liaison de communication en utilisant ladite clé de sécurité et ledit mécanisme de sécurité.
